# EUROPEAN PATENT SPECIFICATION

(11) **EP 3 771 142 B1**
(45) Date of publication and mention of the grant of the patent: **24.12.2025**
(21) Application number: 19187996.4
(22) Date of filing: 24.07.2019
(51) Int. Cl.: H04L 9/40, H04L 9/32, H04L 9/00, G06F 21/32, G06F 21/64

(54) **COMPUTER-IMPLEMENTED METHOD FOR CONTROLLING ACCESS IN A NETWORK**
COMPUTERIMPLEMENTIERTES VERFAHREN ZUR STEUERUNG DES ZUGRIFFS IN EINEM NETZWERK
PROCÉDÉ MIS EN OEUVRE PAR ORDINATEUR DE CONTRÔLE D'ACCÈS DANS UN RÉSEAU

(43) Date of publication of application: 27.01.2021
(73) Proprietor: Robert Bosch GmbH, 70442 Stuttgart (DE)
(72) Inventor: Tezelli-Yilmaz, Sibel, 72076 Tuebingen (DE); Cinaqui Pereira, Claudio, 70794 Filderstadt (DE)

(56) References cited:
- EP-A1- 3 422 221
- US-A1- 2018 060 496
- US-A1- 2018 248 699

## Description

Proposed is a computer-implemented method for controlling access in a network as well as corresponding computer programs.

### Prior Art

An overview over selected proposed identity management systems as well as over remaining technical challenges can be found in "A First Look at Identity Management Schemes on the Blockchain" by Paul Dunphy and Fabien A.P. Petitcolas in: IEEE Security & Privacy ( Volume: 16 , Issue: 4, July/August 2018). EP 3 422 221 A1 discloses a method for electronic health data access control. The Hyperledger projects provide tools, libraries, and reusable components for providing digital identities rooted on blockchains or other distributed ledgers so that they are interoperable across administrative domains, applications, and any other silo. Examples include Indy, Ursa, Aries and Transact, whereas the latter enables smart contracts.

### Invention Disclosure

The present invention is defined in the independent claims. Preferred embodiments are defined in the dependent claims.

Proposed is a computer-implemented method for controlling access in a network with at least two users, whereas a first identity corresponding to a first user of the at least two users is created and stored in encrypted form in an identity management system. The computer-implemented identity management system is a system comprising at least one processor unit, at least one memory unit as well as at least one network interface to connect the system with the network and is adapted to write and read digital data representing digital identities to the memory unit. In a preferred embodiment, it is also adapted to write, read and alter information stored together with the digital identity.
- a second identity corresponding to a second user of the at least two users is created and stored in encrypted form in the identity management system (15),
- a first right to access first information or to access a first software function or to access a first product is assigned to the first identity,
- the second user requests an access to the information or the software function or the product from the first user (11) by sending the request to the identity management system (15),
- the identity management system (15) checks the authentication of the second user based on the second identity,
- the identity management system sends the request to the first user (11),
- the first user (11) denies or approves the request by responding to the identity management system (15),
- the identity management system (15) checks the authentication of the first user (11) based on the first identity,
- dependent on the check secret information stored in encrypted form is shared with the second user, whereas the secret information allows the second user to access the information, the software function or the product,
- the second user accesses the first information or the first software function or the product.

Such a method enables an efficient and trustworthy access control in a network shared by users or their respective network nodes.

In an preferred embodiment, such a method is used to secure an interaction between at least two users or their respective network nodes in a network, whereas the at least two network nodes are connected via the network. A first user connects to the network via a first of the two network nodes. In a preferred embodiment, this first node may be implemented as a smart personal device like a smartphone, personal computer, tablet or similar devices.

The first user creates in the network a first identity corresponding to the first user via a software application running on the first network node, whereas the creation includes the first user providing first biometric information characterizing the first user, especially to the software application running on the first network node. The first biometric information may for example include at least one of an iris sample, a fingerprint sample, a palm veins sample, a specific gesture, or a voice sample of the first user.

The first biometric information is stored in encrypted form by the computer-implemented identity management system.

A second user accesses the network via a second network node and requests via the network a consent of the first user to
∘ the second user accessing secret information of the first user, or
∘ the second user sending information to the first user, or
∘ the first identity corresponding to the first user being connected with a second identity corresponding to the second user, or
∘ the second user being granted access to control a software application assigned to the first identity,
whereas the request is sent via the identity management system.

The first user denies or approves the request of the second user via the software application.

Such a system enables a decentralized and secure creation of digital identities whereas the creation and management of a personal identity corresponding to a human user is strictly limited to this user and secured by personal identity characteristics. The access via a software application running on a personal smart device allows this system to create and manage the digital identity in a user-friendly way while still keeping the creation and management secure and trustworthy.

The management of digital identities includes methods, where the first user authenticates to the identity management system by providing the first biometric information via the software application and whereas after the authentication, the first user alters the first identity or information stored with the first identity corresponding to the first user via a software application running on the first network node. The altering includes adding or removing further biometric information corresponding to the first user, or adding or removing secret information, or adding or removing a certificate. Additionally or alternatively, in order to deny or approve the request, the first user authenticates to the identity management system by providing via the software application a first biometric information, or by providing a further biometric information or by providing a secret information.

These embodiments allow for an efficient and reliable digital identity management by the user, especially to the software application on the first node.

In preferred embodiments the first identity is formed at least partially by at least one of a digital representation of
- the first biometric information,
- an added further biometric information,
- an added secret information,
- an added certificate.

The first identity is at least initially formed based on the first biometric information and a consent of the first user to create the first identity. This embodiment ensures that the digital identity is characteristic and includes the required basic information to allow for a safe use of a user's digital identity information: the user's consent to its creation.

In preferred embodiments of the invention, the denial or approval by the first user of the request of the second user is stored by the software application as one of recorded consents. An overview over at least one of recorded and still open consent requests may be provided to the first user by the software application, allowing the first user to deny, grant or revoke any of the corresponding consents.

This allows for an especially user-friendly management of the digital identities.

In the following, the embodiments of the invention are explained in detail. The corresponding drawings show:
- Fig. 1: shows an exemplary system to create, store and manage digital identities in a network.
- Fig. 2: shows a schematic flowchart of an exemplary method for creating and managing a digital identity in a network.
- Fig. 3: shows an example for the interaction of users in a network using their digital identities.

### Detailed description and embodiments

Digital Identity Management in networks is an important technical challenge. The term identity (short: ID) means a set of attributes related to an entity (ISO29115). A digital ID is a digital representation in binary numbers of an identity. A human identity is the set of human attributes related to a human being (e.g. the human body). Biometrics are human body measurements and calculations (e.g. digital representation in binary numbers of body parts) and can be an effective way to digitally identify one unique human being. Biometrics are data, therefore biometrics can be stored - and stolen. Keeping stored biometric information secure is important to secure the privacy of the corresponding person.

Distributed ledger technology can be used to manage data and - combined with security means - it can be used to manage data in a secure way. For example, a Blockchain system may use an information package carried within a digital block that contains the cryptographic hash of the previous block and a timestamp, validated by a decentralized consensus. Distributed ledger or Blockchain technology can be used to create, store and manage a digital ID.

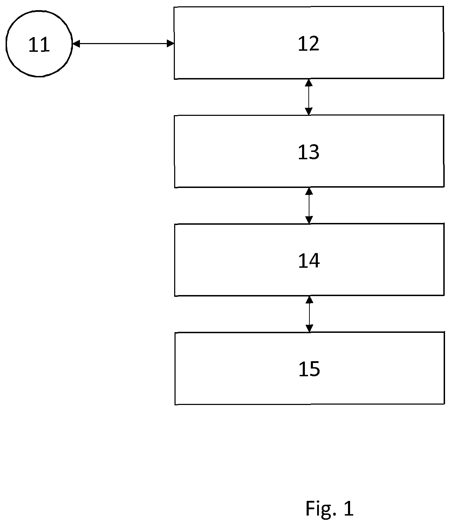

An exemplary system to create, store and manage digital identities in a network is shown in Fig. 1. A user 11 interacts with a device 12, which is connected to a network, e.g. connected to the internet. In a preferred embodiment, device 12 may be a computing device like a mobile computing device (smartphone etc.) with user interface and network interfaces.

To create a digital identity, user 11 uses a software application running on device 12 to provide first biometric information to the software application on device 12. In a preferred embodiment, the first biometric information is provided to the software application by using a sensor of device 12 to measure or record a biometric property, such as an image of human iris, a fingerprint, facial features, a gesture, a voice sample etc.

The used software application of device 12 interacts with software application 13. Software 13 is a software running e.g. on a server infrastructure. Via the software 13 information can be routed in a secure manner from device 12 to other software applications. Software application 13 interacts with software application 14 running on an identity management platform. Identity management platforms are platforms where digital identities and corresponding content stored locally is managed by using software applications running on the hardware of the platform. The first biometric information provided from user 11 to device 12 is securely sent to the software application 14 running on the identity management platform via software application 13 running on a server infrastructure.

Software application 14 of the identity management platform stores a digital representation of the first biometric information on storage means of the identity management platform. Software application 14 interacts with software application 15 of a distributed ledger system. The first biometric information is stored locally and the hashed block of information in a distributed ledger using software application 15. It is stored in encrypted form and constitutes the seed of a newly created digital identity for user 11

If the user 11 wants to a manage his digital identity, e.g. add or remove personal secrets, add or remove further biometric information, approve or deny a request of consent by another user, request consent of another user etc., he may do this by authenticating based on the first biometric information (or subsequently added further biometric information or personal secrets) and sending the corresponding information or request via the software application running on device 12 and software application 13 to software application 14 running on the identity management platform.

Such a request for consent by another user may for example refer to the other user accessing secret information of user 11, or the other user sending information to user 11, or the identity corresponding to user 11 being connected with a second identity corresponding to the other user, or the other user being granted access to control a software application assigned to the identity corresponding to user 11. Generally, consent occurs when one person voluntarily agrees to something. Digital consent is a digital representation in binary numbers of a consent.

A digital identity can now be formed by merging digital consent and biometrics into one distributed ledger identity or Blockchain identity. That means that the biometrics and digital consents form the core of the digital identity. A distributed ledger or Blockchain can store digital identity numbers for hashed digital representations of biometrics and consents. Each digital identity may only contain the necessary biometrics' details and is used only for consented purposes. Biometrics may be stored into a chip (integrated circuit, encapsulated co-processor) with a time stamp.

Consents for specific purposes or requests may be encapsulated with a yes (e.g. digitally "1") or a no (e.g. digitally "0"), so they can be granted, denied and revoked.

Such a digital identity system enables identity tokens, which are special digital identities that can replace accounts (e.g. email + password) and allow user managed access. Using such identity tokens, a network can be used as a cross-consent identity network. Two consents are necessary to create any connection between identities. Accordingly, connections between digital identities are created via human digital consent and stay valid only while the human digital consents are not revoked at one end.

Products or things can have corresponding identities. However, it is proposed that these digital identities are dependent on and need to be assigned to at least one digital identity corresponding to an actual human being as base identity. Similarly, company identities can be created as dependent on and assigned to a digital identity of an official representative (e.g. via power of authority consent).

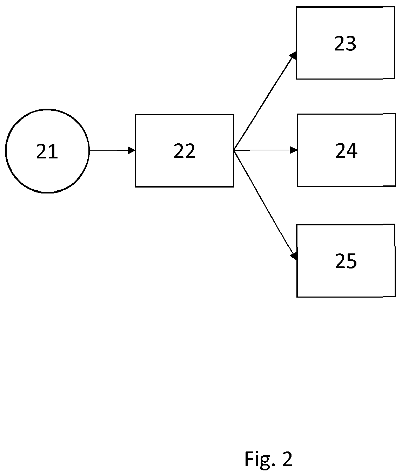

Fig. 2 shows a schematic flowchart of an exemplary method for creating and managing a digital identity in a network.

In a first step 21, a root string representing a digital identity is created. This step starts with an input from a user to a software application running on a user device. The software application requests a first biometric information from the user as well as first consent from the user. This information is used as attributes to create a digital identity as a number or block in a distributed ledger or Blockchain, i.e. a distributed identifier. The software application may request a name for this first identity. In a preferred embodiment, this name is private (i.e. not shared and only on the device). Only the owner of the identity may decide which secret to share with whom. The software application sends the distributed identifier to an identity management platform, which employs distributed ledger technology. The software application also stores the biometric information on the device using local hardware.

The requested consent may refer to a consent to creating a digital identity for the user, the biometric information may be chosen among a selection of different options like measuring or recording an iris sample, fingerprint or palm veins sample, a specific gesture, a voice sample etc.

The creation of a root string representing a digital identity based on a first consent and first biometric information in such a way is secure and fulfills privacy and data protection requirements. To this end, the first consent is digitized by reducing it to a digital string. Then the first biometric information is processed, e.g. in accordance with ISO/IEC JTC 1/SC 37, and added to the digital string representing the first consent. This results in a root string for the digital identity, e.g. compliant with ISO29115. To ensure security, the hashed string representing the digital identity is encrypted. In a preferred embodiment, the digital identity is encrypted by two algorithms, e.g. one classical algorithm (e.g. elliptic curve) and one generating post-quantum keys, preventing future attacks. The encrypted string is stored as digital identity in the distributed ledger, e.g. Blockchain, on a hardware memory of the identity management platform.

Using such a method for creating and managing a digital identity, a technical system is provided which fulfills data protection requirements for consents like:
- prominent and separate (easy to understand, plain/clear language)
- positive opt-in (no pre-ticked, no default on)
- specific, different consent for different data
- contains the reason (why) and the use (what for)
- storage information (how, when / time stamp, exact words)
- opt-out as simple as opt-in

Once, the digital identity is created using the root string, it may be supplemented in a second step 22 by providing further information like further biometric information or personal secrets, for example passwords or authority-dependent information like University diploma, driver licence, personal ID, social security number, medical records etc. This information may be used as further attributes to be stored as the digital identity and therefore making the digital identity stronger.

The information stored with or as part of the digital identity may then be used as legitimizing proof in step 23. It may for example be used to verify this information to other users in the network or to authenticate to other users or network nodes or to access other network nodes or to log in to applications or services in the network.

To use information or secrets stored with or as part of the digital identity, the software application running on the user device receives input representing a request, e.g.:
- a request by the user to access an online service,
- a request for authorization for login by an online service,
- a request for legitimizing proof (e.g. a certain qualifying age or the possession of a certain document like a driver's licence) by an online service
- a request by a federated identity service, e.g. openlD,
- a request by a user-managed access service, e.g. oAUTH.

The software application accesses the digital identity to check the consent for such an action and to check whether the necessary information is stored with or as part of the digital identity. If consent and information are stored and valid, the software application creates a token, which includes only the required and consented secrets for this specific action. Therefore, the token is a bundle of information the user want or agreed to share with the specific requester. If there is no consent information stored for this action, the software application may ask the user for consent. If the requested or necessary information is not stored, the software application may ask the user to create and store it. Finally, the software application shares the token with the requester.

Therefore, one piece of secret information and one piece of consent are bundled into one token to be used as an information package able to fulfil a request for legitimizing proof or for authorizing information. This token is used to share the minimum needed information.

In an alternative or subsequent step 24, the user may manage consent using his created digital identity. To this end, the software application on the user device receives and stores an answer from the user to each specific consent request: yes or no (e.g. stored as 1 or 0). The software application can create a backlog of requests and enable its user to answer at any possible time.

For example, such a request may be a question "Do you consent to user A / service B/ company C sending you newsletters with the conditions... ?". Such a question could be triggered by the user himself or by the party asking for consent, i.e. user A, service B or company C.

In a preferred embodiment, the software application checks, whether the question / conditions of the consent are compliant with predetermined data protection or privacy requirements, e.g. limit date or revocation option.

In a preferred embodiment, the software application automatically suggests questions on related categories of requests to expand the given consent setup. It may also support with reminders in revoking, revalidating, re-consenting to enable secret sharing. Such a functionality can be extended with existing machine learning algorithms to form an assistant to ask the questions and keep the support manageable (reminding about expired consents or time limits of already existing consents, etc.).

In a preferred embodiment, the software application can show a summary of or an overview over all or selected consents to the user. Core functionality of such an overview or consent dashboard is keeping the consent management practical for the user, e.g. by using the following rules:
- all consents are created answering a question with yes or no
- accordingly the consents are visualized as yes or no
- all consents can be granted, denied, revoked, re-granted, revoked again etc. with a single action.

In an alternative or subsequent step 25, digital identities can be connected, e.g. newly created digital identity based on newly created root strings can be connected. To this end, the software application on the user device asks for consent to establish one-to-one connections between first identities. For that, the software application creates distributed identifiers, e.g. including distributed identifiers to object or smart products the user owns. This creation of distributed identifiers only happens after according consent by the user to the software application. In a preferred embodiment, all distributed identifiers are listed (replicated) as attributes in the user's digital identity.

In order to connect existing root strings, for example a third root string can be generated hashing the two existing root strings. This third root string can be replicated as a secret of the original two root strings in each consent dashboard. These two root strings can deny on both sides the existing third root string. Any number of secondary strings can be created via consent of one root string. All these secondary strings are connected to the one root string via this consent.

All one-to-one connections including identities for objects or smart products are only valid while the base digital identity consents at both ends are still valid. One-to-one connection can be used to share secrets or to create a smart contract, e.g. by using two base identities corresponding to human users to generate a distributed identifier for the smart contract and confirm the agreement between the two identities.

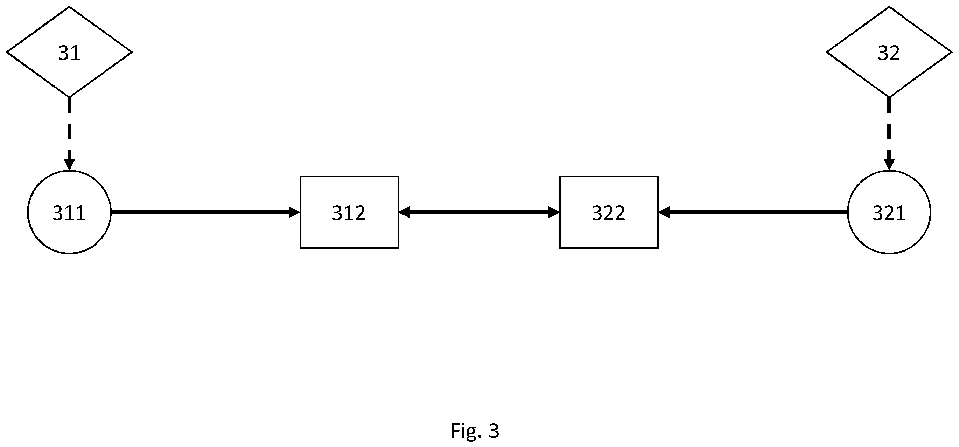

In Fig. 3, an example for the interaction of users in a network using their digital identities is shown. A first digital identity 311 is created based on a root string created by merging information received by a first user 31, whereas the information includes a first consent and a first secret like a biometrical information. A second digital identity 321 is created based on a root string created by merging information received by a second user 32, whereas the information includes a first consent and a first secret like a biometrical information. A third digital identity 312 is created for example for a product, in this example for a car belonging to the user 31. Digital identity 312 is connected to and dependent on the first digital identity 311. The creation of the third digital identity is possible only after the consent of user 32 provided via the first digital identity 311. A fourth digital identity 322 is created for example for a product, in this example for a garage belonging to the user 32. Digital identity 322 is connected to and dependent on the second digital identity 321. The creation of the fourth digital identity is possible only after the consent of user 32 provided via the second digital identity 321.

The third digital identity, corresponding to the car belonging to user 31, and the fourth digital identity, corresponding to the garage belonging to user 32, can include consents to action provided by the respective owner of the products. Such consents may include the consent to certain conditions of a smart contract automatically negotiated between products. For example, user 31 may consent to the car negotiating a smart contract with a garage with a maximum fee per parking time as well as negotiation strategy or format and user 32 may consent to the garage negotiating a smart contract with a car with a minimum fee per parking time as well as negotiation strategy or format. Within these consented conditions, the products may now negotiate a smart contract on their own, for example allowing the car to park in the garage (including the opening of the garage door) for a negotiated parking fee. In alternative embodiments, the consent to the conditions for the negotiation or the consent to making negotiations at all may not be given in advance, but requested from the users by their products via the respective digital identities in the digital identity management system.

## Claims

1. Computer-implemented method for controlling access in a network with at least two users, the method comprising:
- a first identity corresponding to a first user (11) of the at least two users is created and stored in encrypted form in an identity management system (15), wherein the first identity is at least initially formed based on a first biometric information and a consent of the first user (11) to create the first identity,
- the first user (11) authenticates to the identity management system (15) by providing the first biometric information via the software application and whereas after the authentication, the first user (11) alters the first identity or information stored with the first identity corresponding to the first user (11) via the software application running on the first network node (12), whereas the altering includes
▪ adding or removing further biometric information corresponding to the first user (11), or
▪ adding or removing secret information, or
▪ adding or removing a certificate
- a second identity corresponding to a second user of the at least two users is created and stored in encrypted form in the identity management system (15),
- a first right to access first information or to access a first software function or to access a first product is assigned to the first identity,
- the second user requests an access to the information or the software function or the product from the first user (11) by sending the request to the identity management system (15),
- the identity management system (15) checks the authentication of the second user based on the second identity,
- the identity management system sends the request to the first user (11),
- the first user (11) denies or approves the request by responding to the identity management system (15),
- the identity management system (15) checks the authentication of the first user (11) based on the first identity,
- dependent on the check secret information stored in encrypted form is shared with the second user, whereas the secret information allows the second user to access the information, the software function or the product,
- the second user accesses the first information or the first software function or the product.

2. Method according to claim 1, **characterized in that**
- the first user (11) connects to the network via a first of two network nodes (12),
- the first user (11) creates the first identity corresponding to the first user in the network via a software application running on the first network node (12), whereas the creation includes the first user (11) providing first biometric information characterizing the first user (11),
- the first biometric information is stored in encrypted form by the identity management system (15).

3. Method according to one of the preceding claims, **characterized in that** the first identity is formed at least partially by at least one of a digital representation of
∘ a first biometric information,
∘ an added further biometric information,
o an added secret information,
o an added certificate.

4. Method according to one of the preceding claims, **characterized in that** in order to deny or approve the request, the first user (11) authenticates to the identity management system (15) by providing via a software application a first biometric information, a further biometric information or a secret information.

5. Method according to one of the claims 2 to 4, **characterized in that** the first biometric information includes at least one of an iris sample, a fingerprint sample, a palm veins sample, a specific gesture, or a voice sample of the first user (11).

6. Method according to one of the preceding claims, **characterized in that** the denial or approval by the first user (11) of the request of the second user is stored by the software application (12) as one of recorded consents.

7. Method according to one of the preceding claims, **characterized in that** an overview over at least one of recorded and still open consent requests is provided to the first user (11), whereas one of the requests can be accessed by the first user (11) to deny, grant or revoke the corresponding consent.

8. Computer program, adapted to carry out a method according to one of the preceding claims.

9. Storage means storing a computer program according to claim 8.

## Patentansprüche

1. Computerimplementiertes Verfahren zum Steuern eines Zugriffs in einem Netzwerk mit mindestens zwei Benutzern, wobei das Verfahren umfasst, dass:
- eine erste Identität, die einem ersten Benutzer (11) der mindestens zwei Benutzer entspricht, erzeugt und in einer verschlüsselten Form in einem Identitätsverwaltungssystem (15) gespeichert wird, wobei die erste Identität zumindest anfänglich basierend auf ersten biometrischen Informationen und auf einer Einwilligung des ersten Benutzers (11) gebildet wird, um die erste Kennung zu erzeugen,
- der erste Benutzer (11) für das Identitätsverwaltungssystem (15) authentifiziert wird, indem die ersten biometrischen Informationen über die Softwareanwendung bereitgestellt werden und wobei der erste Benutzer (11) nach der Authentifizierung die erste Identität oder Informationen, die mit der ersten Identität, die dem ersten Benutzer (11) entspricht, gespeichert sind, über die Softwareanwendung verändert, die in dem ersten Netzwerkknoten (12) ausgeführt wird, wobei das Verändern beinhaltet
▪ Hinzufügen oder Entfernen von weiteren biometrischen Informationen, die dem ersten Benutzer (11) entsprechen, oder
▪ Hinzufügen oder Entfernen einer geheimen Information, oder
▪ Hinzufügen oder Entfernen eines Zertifikats
- eine zweite Identität, die einem zweiten Benutzer der mindestens zwei Benutzer entspricht, erzeugt und in verschlüsselter Form in dem Identitätsverwaltungssystem (15) gespeichert wird,
- ein erstes Recht zum Zugreifen auf erste Informationen oder zum Zugreifen auf eine erste Softwarefunktion oder zum Zugreifen auf ein erstes Produkt der ersten Identität zugewiesen wird,
- der zweite Benutzer einen Zugriff auf die Informationen oder die Softwarefunktion oder das Produkt von dem ersten Benutzer (11) anfordert, indem die Anforderung an das Identitätsverwaltungssystem (15) gesendet wird,
- das Identitätsverwaltungssystem (15) die Authentifizierung des zweiten Benutzers basierend auf der zweiten Identität überprüft,
- das Identitätsverwaltungssystem die Anforderung zum ersten Benutzer (11) sendet,
- der erste Benutzer (11) die Anforderung ablehnt oder genehmigt, indem er dem Identitätsverwaltungssystem (15) antwortet,
- das Identitätsverwaltungssystem (15) die Authentifizierung des ersten Benutzers (11) basierend auf der ersten Identität überprüft,
- die geheime Information, die in verschlüsselter Form gespeichert ist, in Abhängigkeit von der Überprüfung mit dem zweiten Benutzer gemeinsam genutzt werden, wobei die geheime Information dem zweiten Benutzer erlaubt auf die Informationen, die Softwarefunktion oder das Produkt zuzugreifen,
- der zweite Benutzer auf die ersten Informationen oder die erste Softwarefunktion oder das Produkt zugreift.

2. Verfahren nach Anspruch 1, **dadurch gekennzeichnet, dass**
- sich der erste Benutzer (11) über einen ersten der zwei Netzwerkknoten (12) mit dem Netzwerk verbindet,
- der erste Benutzer (11) in dem Netzwerk über eine Softwareanwendung, die in dem ersten Netzwerkknoten (12) ausgeführt wird, eine erste Identität erzeugt, die dem ersten Benutzer entspricht, wobei die Erzeugung beinhaltet, dass der erste Benutzer (11) erste biometrische Informationen bereitstellt, die den ersten Benutzer (11) charakterisieren,
- die ersten biometrischen Informationen in verschlüsselter Form durch das Identitätsverwaltungssystem (15) gespeichert werden.

3. Verfahren nach einem der vorhergehenden Ansprüche, **dadurch gekennzeichnet, dass** die erste Identität mindestens teilweise durch mindestens eine von einer digitalen Repräsentation gebildet wird von:
∘ ersten biometrischen Informationen,
∘ hinzugefügter weiterer biometrischer Informationen,
∘ einer hinzugefügten geheimen Information,
∘ eines hinzugefügten Zertifikats.

4. Verfahren nach einem der vorhergehenden Ansprüche, **dadurch gekennzeichnet, dass** sich der erste Benutzer (11) zum Ablehnen oder Genehmigen der Anforderung bei dem Identitätsverwaltungssystem (15) authentifiziert, indem er über eine Softwareanwendung erste biometrische Informationen, weitere biometrische Informationen oder eine geheime Information bereitstellt.

5. Verfahren nach einem der vorhergehenden Ansprüche 2 bis 4, **dadurch gekennzeichnet, dass** die ersten biometrischen Informationen mindestens eine von einer Irisabtastung, einer Fingerabdruckabtastung, einer Handflächenvenenabtastung, einer speziellen Geste oder einer Spracherkennung des ersten Benutzers (11) beinhalten.

6. Verfahren nach einem der vorhergehenden Ansprüche, **dadurch gekennzeichnet, dass** die Ablehnung oder die Genehmigung der Anforderung des zweiten Benutzers durch den ersten Benutzer (11) von der Softwareanwendung (12) als eine von mehreren aufgezeichneten Einwilligungen gespeichert wird.

7. Verfahren nach einem der vorhergehenden Ansprüche, **dadurch gekennzeichnet, dass** eine Übersicht über mindestens eine der aufgezeichneten und noch offenen Einwilligungsanforderungen dem ersten Benutzer (11) bereitgestellt wird, wobei der erste Benutzer (11) auf eine der Anforderungen zugreifen kann, um die entsprechende Einwilligung abzulehnen, zu gewähren oder zu widerrufen.

8. Computerprogramm, das geeignet ist zum Ausführen eines Verfahrens nach einem der vorhergehenden Ansprüche.

9. Speicherelement, in dem ein Computerprogramm nach Anspruch 8 gespeichert ist.

## Revendications

1. Procédé mis en œuvre par ordinateur pour commander l'accès à un réseau ayant au moins deux utilisateurs, le procédé comprenant les étapes dans lesquelles :
- une première identité correspondant à un premier utilisateur (11) des au moins deux utilisateurs est crée et stockée sous forme chiffrée dans un système de gestion d'identité (15), la première identité étant au moins initialement formée sur la base de premières informations biométriques et d'un consentement du premier utilisateur (11) à créer la première identité,
- le premier utilisateur (11) s'authentifie auprès du système de gestion d'identité (15) en fournissant les premières informations biométriques via l'application logicielle et, après l'authentification, le premier utilisateur (11) modifie la première identité ou les informations stockées avec la première identité correspondant au premier utilisateur (11) via l'application logicielle s'exécutant sur le premier nœud de réseau (12), la modification incluant
▪ l'ajout ou la suppression d'informations biométriques supplémentaires correspondant au premier utilisateur (11), ou
▪ l'ajout ou la suppression d'informations secrètes, ou
▪ l'ajout ou la suppression d'un certificat
- une deuxième identité correspondant à un deuxième utilisateur des au moins deux utilisateurs est créé et stockée sous forme chiffrée dans le système de gestion d'identité (15),
- un premier droit d'accès à des premières informations ou d'accès à une première fonction logicielle ou d'accès à un premier produit est attribué à la première identité,
- le deuxième utilisateur demande un accès aux informations ou à la fonction logicielle ou au produit du premier utilisateur (11) en envoyant la demande au système de gestion d'identité (15),
- le système de gestion d'identité (15) vérifie l'authentification du deuxième utilisateur sur la base de la deuxième identité,
- le système de gestion d'identité envoie la requête au premier utilisateur (11),
- le premier utilisateur (11) refuse ou approuve la demande en répondant au système de gestion d'identité (15),
- le système de gestion d'identité (15) vérifie l'authentification du premier utilisateur (11) sur la base de la première identité,
- en fonction de la vérification, des informations secrètes stockées sous forme chiffrée sont partagées avec le deuxième utilisateur, les informations secrètes permettant au deuxième utilisateur d'accéder aux informations, à la fonction logicielle ou au produit,
- le deuxième utilisateur accède aux premières informations ou à la première fonction logicielle ou au produit.

2. Procédé selon la revendication 1, **caractérisé en ce que**
- le premier utilisateur (11) se connecte au réseau via un premier de deux nœuds de réseau (12),
- le premier utilisateur (11) crée la première identité correspondant au premier utilisateur dans le réseau, via une application logicielle s'exécutant sur le premier nœud de réseau (12), la création comportant la fourniture, par le premier utilisateur (11), de premières informations biométriques caractérisant le premier utilisateur (11),
- les premières informations biométriques sont stockées sous forme chiffrée par le système de gestion d'identité (15).

3. Procédé selon l'une des revendications précédentes, **caractérisé en ce que** la première identité est formée au moins partiellement par au moins l'une d'une représentation numérique
o de premières informations biométriques,
o d'informations biométriques supplémentaires ajoutées,
o d'informations secrètes ajoutées,
o d'un certificat ajouté.

4. Procédé selon l'une des revendications précédentes, **caractérisé en ce que**, pour refuser ou approuver la demande, le premier utilisateur (11) s'authentifie auprès du système de gestion d'identité (15) en fournissant, via une application logicielle, des premières informations biométriques, des informations biométriques supplémentaires ou des informations secrètes.

5. Procédé selon l'une des revendications 2 à 4, **caractérisé en ce que** les premières informations biométriques comprennent au moins l'une d'un échantillon d'iris, un échantillon d'empreintes digitales, un échantillon de veines de la paume, un geste spécifique ou un échantillon de voix du premier utilisateur (11).

6. Procédé selon l'une des revendications précédentes, **caractérisé en ce que** le refus ou l'approbation de la demande du deuxième utilisateur par le premier utilisateur (11) est stockée par l'application logicielle (12), comme l'un parmi des consentements enregistrés.

7. Procédé selon l'une des revendications précédentes, **caractérisé en ce qu'**un aperçu d'au moins l'une parmi des demandes de consentement enregistrées et encore ouvertes est fourni au premier utilisateur (11), l'une des demandes étant accessible par le premier utilisateur (11) pour refuser, accorder ou révoquer le consentement correspondant.

8. Programme d'ordinateur, adapté à mettre en œuvre un procédé selon l'une des revendications précédentes.

9. Moyen de stockage stockant un programme d'ordinateur selon la revendication 8.
